(19) Europäisches Patentamt
European Patent Office
Office européen des brevets

(11) Numéro de publication : **0 192 515 B1**

# (12) FASCICULE DE BREVET EUROPÉEN

(45) Date de publication du fascicule du brevet : **26.04.89**

(51) Int. Cl.⁴ : **C 08 G 69/20**, C 08 L 77/02, C 08 J 3/12

(21) Numéro de dépôt : **86400117.7**

(22) Date de dépôt : **21.01.86**

## (54) Procédé de fabrication de poudre de polyamide.

(30) Priorité : **30.01.85 FR 8501274**

(43) Date de publication de la demande : **27.08.86 Bulletin 86/35**

(45) Mention de la délivrance du brevet : **26.04.89 Bulletin 89/17**

(84) Etats contractants désignés : **AT BE CH DE GB IT LI NL**

(56) Documents cités :
**CHEMICAL ABSTRACTS, vol. 92, 1980, pages 41 et 42, abrégé no. 199327q, Columbus, Ohio, US; & JP - A - 80 03 427 (TORAY INDUSTRIES INC.) 11.01.1980**
**CHEMICAL ABSTRACTS, vol. 100, 1984, page 83, abrégé no. 158133p, Columbus, Ohio, US; & JP - A - 58 222 147 (ASAHI CHEMICAL INDUSTRY CO., Ltd.) 23.12.1983**
**CHEMICAL ABSTRACTS, vol. 94, 1981, page 49, abrégé no. 122601h, Columbus, Ohio, US; & JP - A - 80 149 346 (TORAY INDUSTRIES INC.) 20.11.1980**

(73) Titulaire : **ATOCHEM**
**4 & 8, Cours Michelet La Défense 10**
**F-92800 Puteaux (FR)**

(72) Inventeur : **Hilaire, Jean-Claude**
**5, Avenue Gratiane**
**F-64000 Pau (FR)**
Inventeur : **Guerin, Roland**
**232, Avenue Jean Mermoz**
**F-64000 Pau (FR)**

(74) Mandataire : **Foiret, Claude et al**
**ATOCHEM Département Propriété Industrielle**
**F-92091 Paris la Défense 10 Cédex 42 (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 192 515 B1

Jouve, 18, rue St-Denis, 75001 Paris, France

**Description**

Les poudres de polyamides qui ont trouvé des débouchés intéressants, surtout dans le domaine des revêtements d'objets métalliques, doivent avoir des granulométries adaptées à leur mode d'application et à leurs utilisations ; c'est ainsi que les poudres appliquées sur les métaux par la technique de fluidisation-trempage auront des granulométries de l'ordre de 80 à 300 microns, celles appliquées par poudrage électro-statique inférieures à 60 microns etc. Dans beaucoup de cas, il faut que la granulométrie varie entre d'étroites limites.

Différentes techniques ont été proposées pour produire de telles poudres ; citons, entre autres, le broyage cryogénique de granulés de polyamide, ou la mise en solution à chaud des mêmes granulés dans un solvant convenable suivie d'une précipitation ; dans l'un et l'autre cas, il est nécessaire de produire des granulés de polyamide par polymérisation de leurs monomères (sels de diacides et de diamines, amino acides, lactames) et ensuite sélecter la poudre obtenue pour obtenir la granulométrie désirée.

Dans le cas des polyamides dont le monomère est un lactame, c'est-à-dire essentiellement le polyamide 12 issu du lauryllactame et le polyamide 6 issu du caprolactame, des méthodes originales ont été proposées pour transformer le lactame directement en poudre fine de polyamide. Ces méthodes consistent à mettre le lactame en suspension dans un liquide organique (Brevet français n° 1 213 993) ou en solution dans un solvant (Brevet allemand n° 1 183 680) et, en effectuant une polymérisation de type anionique d'obtenir directement de la poudre de polyamide qui se sépare d'elle-même du milieu liquide au fur et à mesure de sa formation.

Les méthodes de polymérisation anionique des lactames sont fondées essentiellement sur l'utilisation d'un catalyseur tel que le sodium ou un de ses composés comme l'hydrure de sodium ou le méthylate de sodium et d'un activateur tel que les lactame-N-carboxy-anilides, les isocyanates, les carbodi-imides, les cyanimides, les acyl-lactames, les triazines, les urées, les imides-N-substituées, les esters...

L'utilisation de tels procédés, à première vue séduisants, a conduit à pas mal de déboires : mauvais rendements dus à des polymérisations incomplètes, accélérations intempestives de la réaction conduisant à des prises en masse et à des encroûtements des parois du réacteur ou des agitateurs, difficultés d'atteindre ou de reproduire une granulométrie donnée, ... et de nombreuses solutions ont été proposées pour pallier à ces inconvénients (Brevets français n° 1 521 130 - 1 601 194 - 1 601 195 - 1 602 751 - DE OS 1942046) : introduction progressive du catalyseur et de l'activateur, programmation de la température, sélection des solvants les plus appropriés...

Malgré tous ces perfectionnements, la fabrication industrielle de ces poudres est restée assez délicate et exige une grande attention de la part des opérateurs.

La présente invention s'est proposée pour tâche de simplifier encore plus la fabrication industrielle de telles poudres et de conduire à des produits de meilleure qualité avec des rendements améliorés.

Notre procédé consiste à produire une poudre de polylactame par polymérisation d'un ou plusieurs lactames en solution dans un solvant approprié, en présence d'un catalyseur anionique et d'un activateur pris à l'état solide ou liquide, en présence éventuellement d'une charge minérale ou organique finement divisée, et en présence également, ce qui fait l'objet de la présente invention, d'une N, N'-alkylène bis amide.

Tout lactame générateur de polyamide peut être mis en œuvre dans l'invention ; citons plus particulièrement ceux qui ont acquis une importance industrielle : le caprolactame, l'oenantholactame, le capryllactame et le lauryllactame.

On peut également mettre en œuvre un mélange de deux ou plusieurs de ces lactames ce qui conduit à l'obtention d'une poudre de copolyamide.

Comme dit ci-dessus, on peut éventuellement introduire une charge finement divisée de manière à introduire des germes de cristallisation ; cette charge peut être organique, telle que de la poudre de polyamide, ou minérale, comme de la silice, du talc...

Il importe que cette charge n'apporte aucune trace d'eau ; la silice que nous avons utilisée dans les exemples a été soigneusement déshydratée.

On peut, bien entendu, ajouter en plus toutes charges (pigments colorants...) ou additifs à condition qu'ils soient bien secs et inertes vis-à-vis du milieu réactionnel.

Par N,N'-alkylène bis amide, nous entendons plus particulièrement les N,N'-alkylène bis amides d'acides gras et, plus particulièrement encore,

la N,N'-éthylène bis stéaramide de formule

$$\begin{array}{l} CH_2\text{—}NH\text{—}CO\text{—}C_{17}H_{35} \\ | \\ CH_2\text{—}NH\text{—}CO\text{—}C_{17}H_{35} \end{array}$$

la N,N'-éthylène bis oléamide de formule

$$\begin{array}{l} CH_2\text{—}NH\text{—}CO\text{—}C_{17}H_{33} \\ | \\ CH_2\text{—}NH\text{—}CO\text{—}C_{17}H_{33} \end{array}$$

les N,N'-éthylène bis palmitamide, gadoléamide, cétoléamide et érucamide, la N,N'-dioléyladipamide et la N,N'-diérucylamide.

La quantité de N,N'-alkylène bis amide à ajouter est de 0,001 à 4 moles, de préférence de 0,075 à 2 moles pour 100 moles de lactame.

L'addition de telles bis amides au milieu réactionnel provoque un ralentissement de la réaction et conduit à une poudre de granulométrie très resserrée avec une grande reproductibilité d'une opération à l'autre sans qu'il y ait encrassement du réacteur.

Le rendement (taux de conversion de lactame en polyamide) n'est pas affecté et reste égal à 100 pour cent.

L'addition de ces bis amides, provoque également une diminution du poids moléculaire de la poudre (mesuré par la viscosité de solution) et, parallèlement, une diminution de la taille des grains, ce qui permet d'obtenir des poudres excessivement fines que l'on n'aurait pas pu obtenir autrement.

Ces diminutions sont d'autant plus marquées que la teneur en bis amide est plus élevée.

On peut, si nécessaire, et ceci fait également l'objet de la présente invention, compenser ces diminutions en jouant sur les paramètres suivants :

— La température de réaction — toute élévation de la température, entre 80 °C et 130 °C, augmentera à la fois le poids moléculaire et la taille des grains.

— Le taux de catalyseur (de 0,8 moles à 3 moles pour 100 moles de lactame) d'activateur et le rapport catalyseur/activateur dont l'augmentation entraînera une augmentation du poids moléculaire et de la taille des grains.

On peut également diminuer et le poids moléculaire de la poudre et la taille de ses grains en diminuant la vitesse d'injection de l'activateur, ce qui revient à augmenter la durée de la réaction.

On peut également et, ceci fait également l'objet de la présente invention, agir sur la taille des grains, sans en modifier le poids moléculaire, en jouant sur les paramètres suivants :

— La vitesse d'agitation — les grains de poudre seront d'autant plus fins qu'elle sera plus élevée et inversement.

— La teneur en charge finement divisée — les grains de poudre seront d'autant plus fins qu'elle sera plus élevée et inversement.

Certains de ces paramètres auront plus d'influence que d'autres : c'est ainsi qu'une faible augmentation de la température augmentera considérablement la viscosité et faiblement la taille des grains.

On peut ainsi en jouant sur tous ces facteurs obtenir à volonté une poudre de granulométrie et de poids moléculaire donnés.

Dans les exemples que nous citons ci-dessous, exemples qui ont pour but d'illustrer l'invention sans toutefois la limiter, les essais ont été réalisés dans un réacteur d'une capacité de 5 litres, muni d'un agitateur à pales, d'une double enveloppe dans laquelle circule de l'huile de chauffage, d'un système de vidange par le fond et d'un sas d'introduction des réactifs balayé à l'azote sec.

Un dispositif de distillation azéotropique sous vide permet d'éliminer toute trace d'eau du milieu réactionnel.

Le solvant utilisé est, en général, une coupe d'hydrocarbure paraffinique dont la plage d'ébullition se trouve entre 140 et 170 °C.

Le poids moléculaire de la poudre de polyamide obtenue est déterminé par mesure de la viscosité inhérente, à 25 °C, d'une solution de 0,5 g de cette poudre dans 100 g de m-crésol.

La granulométrie (diamètre moyen des particules) est mesurée au compteur Coulter.

Pour des raisons de commodité, nous désignerons :

— la N,N'-éthylène bis stéaramide par l'abréviation EBS

— la N,N'-éthylène bis oléamide par l'abréviation EBO

## Exemple 1

On introduit dans le réacteur, maintenu sous un léger courant d'azote, 2 840 ml de solvant, puis successivement 873 g de caprolactame sec, 5 g d'EBS et 4 g de silice finement divisée et déshydratée.

Après avoir mis en route l'agitation à 650 t/minute, on chauffe progressivement jusqu'à 110 °C puis on distille, sous un vide de 200 torrs, 250 ml de solvant afin d'entraîner, par azéotropie, toute trace d'eau éventuellement présente.

Après retour à la pression atmosphérique, on introduit alors rapidement sous azote le catalyseur anionique, 4,6 g d'hydrure de sodium à 80 % de pureté dans de l'huile, et on laisse sous agitation, toujours sous courant d'azote, pendant 60 minutes.

Ensuite, grâce à une petite pompe doseuse, on réalise une injection continue dans le milieu réactionnel de l'activateur choisi : l'isocyanate de stéaryle, la quantité totale d'isocyanate ainsi injectée étant de 22,8 g pendant 2 heures. Parallèlement, la température est programmée pour s'élever progressivement de 110 °C à 135 °C pendant 1 heure — on la maintient à cette température pendant encore 2 heures, soit 1 heure encore après la fin de l'introduction de l'isocyanate.

La polymérisation est alors terminée. On refroidit alors le réacteur à 90 °C et soutire par le fond la bouillie de poudre et de solvant.

Après essorage et séchage, on obtient une poudre de polyamide 6, de granulométrie comprise entre 9 et 19 microns et sans le moindre agglomérat.

Cette poudre a une viscosité inhérente égale à 1,04 et une teneur en caprolactame résiduel de 900 p.p.m.

Le réacteur est très peu encrassé et peut être immédiatement réutilisé pour une nouvelle polymérisation.

Le rendement a été de 100 pour cent.

## Exemple 2

Le mode opératoire est identique à celui de l'exemple 1 à la différence près qu'on n'utilise pas d'EBS.

La poudre obtenue a, à peu près, la même teneur en lactame : 850 p.p.m. mais sa viscosité inhérente 1,26 est plus élevée de même que sa granulométrie (très irrégulière) qui est comprise entre 15 et 40 microns.

Il y a de nombreux agglomérats — de plus, les parois du réacteur et l'agitateur sont encroûtés et nécessitent un nettoyage.

Le rendement est également de 100 pour cent.

## Exemple 3

On introduit dans le réacteur 2 840 ml de solvant, puis successivement 873 g de lauryllactame, 30 g d'EBO et 4,4 g de silice.

On chauffe sous une agitation de 700 t/minute, jusqu'à 120 °C, puis on distille sous un vide de 200 torrs, 220 ml de solvant. Après retour à la pression atmosphérique, on introduit sous azote 1,75 g d'hydrure de sodium à 80 % de pureté et on maintient sous azote à 110 °C pendant 30 minutes. On réduit la température à 100 °C puis grâce à une petite pompe doseuse, on introduit progressivement de l'isocyanate de stéaryle selon le programme suivant :

— 6,3 d'isocyanate pendant 1 heure à 100 °C,
— 37,8 g d'isocyanate pendant 2 heures à 110 °C.

Une fois cette introduction terminée, la température est maintenue à 110 °C pendant encore 1 heure. La réaction est alors terminée. Après refroidissement à 90 °C, décantation et séchage, la poudre de polyamide 12 obtenue présente les caractéristiques suivantes :

— teneur en lactame résiduel : 650 p.p.m.
— viscosité inhérente : 0,71
— granulométrie comprise entre 8 et 15 microns — il n'y a pas d'agglomérats.
— Le réacteur est presque propre.

## Exemple 4

Le même essai répété mais sans utilisation d'EBO donne une poudre de caractéristiques suivantes :

— teneur en lactame résiduel : 700 p.p.m.
— viscosité inhérente : 0,99
— granulométrie comprise entre 20 et 60 microns.

Il y a de nombreux agglomérats dans la poudre et le réacteur est très encrassé.

## Exemple 5

On introduit dans le réacteur 2 840 ml de solvant, puis, successivement, 873 g de lauryllactame, 7 g d'EBO et 15 g de silice.

On chauffe sous une agitation de 1 000 t/minute jusqu'à 120 °C puis on distille sous un vide de 200 torrs 220 ml de solvant. Après retour à la pression atmosphérique, on introduit sous azote 2,7 g d'hydrure de sodium à 80 % et on maintient sous azote à 110 °C pendant 30 minutes. On réduit ensuite la température à 100 °C puis introduit progressivement de l'isocyanate de stéaryle suivant le programme suivant :

— 3,25 g d'isocyanate pendant 1 heure à 100 °C
— 9,75 g d'isocyanate pendant 3 heures à 110 °C

Après refroidissement à 90 °C, décantation et séchage, on obtient avec un rendement de 100 pour cent de la poudre de polyamide 12 présentant les caractéristiques suivantes :

— viscosité inhérente : 1,30
— granulométrie comprise entre 8 et 15 microns — il n'y a pas d'agglomérats.

Le réacteur est presque propre.

Par comparaison avec l'exemple 3, on voit que l'on a pu obtenir de la poudre de même granulométrie (8 à 15 microns) mais de viscosité beaucoup plus élevée : 1,30 au lieu de 0,71 en jouant, entre autres, sur les paramètres suivants :

— le rapport molaire catalyseur/activateur
— la durée de la réaction
— la teneur en silice
— la vitesse d'agitation, qui ont été augmentés.

Exemple 6

On introduit dans le réacteur 2 840 ml de solvant, 654 g de lauryllactame, 218 g d'oxyde de titane sec et 5 g d'EBS. On agite à 650 t/minute et on chauffe jusqu'à 110 °C. On effectue alors comme dans l'exemple 3, la distillation azéotropique pour éliminer 220 ml de solvant puis on introduit sous azote 3,5 g d'hydrure de sodium à 80 % de pureté. On attend 30 minutes à 110 °C, puis on réduit la température à 100 °C ; on commence alors l'injection de 8,8 g d'isocyanate de stéaryle pendant 2 heures. On remonte ensuite la température à 110 °C et on introduit de nouveau 17,6 g d'isocyanate de stéaryle pendant 2 heures. On maintient cette température de 110 °C pendant une heure supplémentaire puis on refroidit à 90 °C.

Après décantation et séchage, la poudre blanche obtenue a une viscosité de 0,99 et une teneur en lactame résiduel de 350 p.p.m.

Sa granulométrie est comprise entre 13 et 25 microns. Il n'y a pas d'agglomérats et le réacteur n'est pas encrassé, malgré l'importante quantité d'oxyde de titane introduite (25 pour cent).

Exemple 7

Le même essai sans EBS conduit aux résultats suivants :

— viscosité inhérente : 1,60
— granulométrie comprise entre 15 et 40 microns — nombreux agglomérats — réacteur très encrassé.

Exemple 8

On introduit dans le réacteur 2 840 ml de solvant, 261 g de caprolactame, 611 g de lauryllactame, 4 g de silice et 5 g d'EBS. On agite le mélange à 720 t/minute, chauffe à 110 °C, puis on effectue comme précédemment une distillation azéotropique de 250 ml de solvant sous un vide de 200 torrs. Après retour à la pression atmosphérique, on abaisse la température à 80 °C et on introduit sous azote, 8,4 g d'hydrure de sodium à 80 % de pureté ; on laisse sous agitation pendant 1 heure, avant d'introduire par une pompe doseuse 18 g d'isocyanate de stéaryle en 5 heures. La température est maintenue à 80 °C pendant les 3 premières heures, puis on termine la réaction en la montant à 110 °C pendant 3 heures.

On refroidit et après décantation et séchage, la poudre de copolyamide obtenue a une viscosité de 0,98 et une granulométrie comprise entre 26 et 42 microns. L'encrassement du réacteur est très faible.

Exemple 9

Le même essai effectué sans EBS aboutit à une prise en masse dans le réacteur entre la 3$^e$ et 4$^e$ heure d'injection de l'isocyanate.

Exemple 10

On introduit 2 840 ml de solvant, 873 g de dodecalactame, 10 g d'EBO, et 1,5 g de silice. Toujours comme dans les essais précédents, on distille azéotropiquement 250 ml de solvant sous 200 torrs à 110 °C. On refroidit à 100 °C et on ajoute 1,5 g d'hydrure de sodium à 80 % sous azote. Après 1 heure, on règle l'agitation à 350 tours/minute et on injecte l'isocyanate de stéaryle selon le programme suivant :

— 6,3 g d'isocyanate pendant 1 heure à 100 °C
— 37,8 g d'isocyanate pendant 3 heures à 110 °C

puis l'on maintient la température à 120 °C pendant 1 heure.

Après refroidissement et séchage, on obtient une poudre de viscosité 0,93 et de granulométrie comprise entre 31 et 60 microns, sans agglomérats. Le réacteur n'est pas encrassé.

Par comparaison avec l'exemple 3, on constate que l'on a considérablement augmenté la viscosité et la taille des grains en jouant, entre autres, sur les paramètres suivants : réduction de la teneur en EBO, en silice et réduction également de la vitesse d'agitation.

Exemple 11

Le même essai en l'absence d'EBO conduit à une prise en masse au début du palier à 110 °C.

Exemple 12

On introduit 2 840 ml de solvant, 873 g de lauryllactame, 9 g d'EBO et 2 g de silice, distille azéotropiquement 250 ml de solvant sous 200 torrs à 110 °C, refroidit à 100 °C et ajoute 1,55 g d'hydrure de sodium à 80 % sous azote.

Après 1 heure à 100 °C, on règle d'agitation à 350 tours/minute et injecte de l'isocyanate de stéaryle suivant le programme suivant :

— 4,12 g d'isocyanate pendant 1 heure à 100 °C

— 12,38 g d'isocyanate pendant 3 heures à 110 °C

puis maintient la température pendant 1 heure à 120 °C.

Après refroidissement, décantation et séchage, on obtient une poudre de viscosité 1,22 et de granulométrie comprise entre 28 et 52 microns. Il n'y a pas d'agglomérats et le réacteur n'est pas encrassé.

Par comparaison avec l'exemple 10, on constate que l'on a obtenu une poudre de polyamide 12 de granulométrie analogue mais de viscosité plus élevée : 1,22 au lieu de 0,93, en jouant sur les paramètres suivants :

— la teneur en EBO qui a été diminuée, celle en silice qui a été augmentée et le rapport catalyseur/activateur qui a été augmenté.

Exemple 13

On introduit 2 840 ml de solvant, 873 g de lauryllactame, 7 g d'EBO et 15 g de silice, distille azéotropiquement 250 ml de solvant sous 200 torrs à 110 °C, règle l'agitation à 900 tours/minute et introduit 2,7 g d'hydrure de sodium à 80 % sous azote.

Puis, on injecte 13 g d'isocyanate de stéaryle pendant 4 heures à 110 °C.

Après refroidissement et séchage, on obtient une poudre de viscosité 1,36 et de granulométrie comprise entre 12 et 25 microns. Il n'y a pas d'agglomérats et le réacteur n'est pas encrassé.

Par comparaison avec l'exemple 12, on constate que l'on a obtenu une poudre de polyamide 12 de viscosité plus élevée et de granulométrie nettement plus faible en diminuant les quantités d'EBO et d'isocyanate, en augmentant celles de silice et d'hydrure de sodium et en faisant passer la vitesse d'agitation de 350 tours à 900 tours/minute.

Le rapport catalyseur (hydrure de sodium) sur activateur (isocyanate) a été également augmenté.

**Revendications**

1. Procédé de fabrication de poudre de polyamide par polymérisation en solution, procédé consistant à effectuer la polymérisation du ou des lactames monomères, générateurs de ladite poudre, par injection, sous agitation, d'un activateur dans un milieu réactionnel comprenant le ou les dits lactames, un solvant, un catalyseur anionique, un activateur et, éventuellement, un corps inerte finement divisé, générateur de germes cristallins, caractérisé en ce que l'on ajoute audit milieu réactionnel une N,N'-alkylène bis amide.

2. Procédé selon 1, caractérisé en ce que la N,N'-alkylène bis amide est une N,N'-alkylène bis amide d'acide gras.

3. Procédé selon 2, caractérisé en ce que la N,N'-alkylène bis amide est choisie dans le groupe contenant la N,N'-éthylène bis stéaramide et la N,N'-éthylène bis oléamide.

4. Procédé suivant l'une des revendications 1 à 3 caractérisé en ce que la quantité de N,N'-alkylène bis amide ajoutée est de 0,001 à 4 moles pour 100 moles de lactame, de préférence de 0,075 à 2 moles.

5. Procédé suivant l'une des revendications 1 à 4 caractérisé en ce que, en fonction de la quantité de N,N'-alkylène bis amide, on élève la température du milieu réactionnel pour augmenter le poids moléculaire de la poudre et la taille de ses grains.

6. Procédé selon l'une des revendications 1 à 5 caractérisé en ce que, en fonction de la quantité de N,N'-alkylène bis amide, on augmente la quantité de catalyseur pour augmenter le poids moléculaire de la poudre et la taille de ses grains.

7. Procédé selon l'une des revendications 1 à 6 caractérisé en ce que, en fonction de la quantité de N,N'-alkylène bis amide, on augmente le rapport de la quantité de catalyseur à celle d'activateur pour augmenter le poids moléculaire de la poudre et la taille de ses grains.

8. Procédé selon l'une des revendications 1 à 7 caractérisé en ce que on diminue le poids moléculaire de la poudre et la taille de ses grains en diminuant la vitesse d'injection de l'activateur dans le milieu réactionnel.

9. Procédé selon l'une des revendications 1 à 8 caractérisé en ce que on diminue la taille des grains de poudre en augmentant la vitesse d'agitation et inversement.

10. Procédé selon l'une des revendications 1 à 9 caractérisé en ce que on diminue la taille des grains de poudre en augmentant la quantité de corps inerte finement divisé et inversement.

## Claims

1. Process for the manufacture of polyamide powder by polymerization in solution, the process consisting in performing the polymerization of the monomeric lactam(s), precursors of the said powder, by injection, with stirring, of an activator into a reaction mixture comprising the said lactam(s), a solvent, an anionic catalyst, an activator and, if desired, a finely divided inert substance, a precursor of crystalline nuclei, characterized in that an N,N'-alkylenebisamide is added to the said reaction mixture.

2. Process according to 1, characterized in that the N,N'-alkylenebisamide is a fatty acid N,N'-alkylenebisamide.

3. Process according to 2, characterized in that the N,N'-alkylenebisamide is chosen from the group containing N,N'-ethylenebisstearamide and N,N'-ethylenebisoleamide.

4. Process according to one of Claims 1 to 3, characterized in that the quantity of N,N'-alkylenebisamide which is added is 0.001 to 4 moles, preferably 0.075 to 2 moles, per 100 moles of lactam.

5. Process according to one of Claims 1 to 4, characterized in that the temperature of the reaction mixture is raised as a function of the quantity of N,N'-alkylenebisamide, to increase the molecular weight of the powder and the size of its particles.

6. Process according to one of Claims 1 to 5, characterized in that the quantity of catalyst is increased as a function of the quantity of N,N'-alkylenebisamide, to increase the molecular weight of the powder and the size of its particles.

7. Process according to one of Claims 1 to 6, characterized in that the ratio of the quantity of catalyst to that of activator is increased as a function of the quantity of N,N'-alkylenebisamide, to increase the molecular weight of the powder and the size of its particles.

8. Process according to one of Claims 1 to 7, characterized in that the molecular weight of the powder and the size of its particles are decreased by decreasing the rate of injection of the activator into the reaction mixture.

9. Process according to one of Claims 1 to 8, characterized in that the size of the powder particles is decreased by increasing the rate of stirring and vice versa.

10. Process according to one of Claims 1 to 9, characterized in that the size of the powder particles is decreased by increasing the quantity of finely divided inert substance and vice versa.

## Patentansprüche

1. Verfahren zur Herstellung von Polyamidpulver durch Polymerisation in der Lösung, wobei dieses Verfahren darin besteht, die Polymerisation des oder der monomeren Lactame, die dieses Pulver erzeugen, durchzuführen durch Einspritzen eines Aktivators unter Rühren in ein Reaktionsmedium enthaltend das oder die Lactame, ein Solvens, einen anionischen Katalysator, einen Aktivator und gegebenenfalls einen feinzerteilten inerten Körper, der kristalline Keime erzeugt, dadurch gekennzeichnet, daß man zu diesem Reaktionsmedium ein N,N'-Alkylen-bis-amid hinzufügt.

2. Verfahren nach Anspruch 1, dadurch gekennzeichnet, daß das N,N'-Alkylen-bis-amid ein N,N'-Alkylen-bis-amid einer Fettsäure ist.

3. Verfahren nach Anspruch 2, dadurch gekennzeichnet, daß das N,N'-Alkylen-bis-amid ausgewählt wird aus der Gruppe bestehend aus N,N'-Ethylen-bis-stearamid und N,N'-Ethylen-bis-oleamid.

4. Verfahren nach einem der Ansprüche 1 bis 3, dadurch gekennzeichnet, daß die Menge des zugegebenen N,N'-Alkylen-bis-amids 0,001 bis 4 Mol auf 100 Mole an Lactam, vorzugsweise 0,075 bis 2 Mol beträgt.

5. Verfahren nach einem der Ansprüche 1 bis 4, dadurch gekennzeichnet, daß man in Abhängigkeit von der Menge an N,N'-Alkylen-bis-amid die Temperatur des Reaktionsmediums erhöht, um das Molekulargewicht des Pulvers und seine Korngröße zu erhöhen.

6. Verfahren nach einem der Ansprüche 1 bis 5, dadurch gekennzeichnet, daß man in Abhängigkeit von der Menge an N,N'-Alkylen-bis-amid die Menge an Katalysator erhöht, um das Molekulargewicht des Pulvers und seine Korngröße zu erhöhen.

7. Verfahren nach einem der Ansprüche 1 bis 6, dadurch gekennzeichnet, daß man in Abhängigkeit von der Menge an N,N'-Alkylen-bis-amid das Verhältnis der Menge des Katalysators zu der des Aktivators erhöht, um das Molekulargewicht des Pulvers und seine Korngröße zu erhöhen.

8. Verfahren nach einem der Ansprüche 1 bis 7, dadurch gekennzeichnet, daß man das Molekulargewicht des Pulvers und seine Korngröße verringert, indem man die Einspritzgeschwindigkeit des Aktivators in das Reaktionsmedium verringert.

9. Verfahren nach einem der Ansprüche 1 bis 8, dadurch gekennzeichnet, daß man die Korngröße des Pulvers verringert, indem man die Rührgeschwindigkeit erhöht und umgekehrt.

10. Verfahren nach einem der Ansprüche 1 bis 9, dadurch gekennzeichnet, daß man die Korngröße des Pulvers verringert, indem man die Menge des feinzerteilten inerten Körpers erhöht und umgekehrt.